# EUROPÄISCHE PATENTSCHRIFT

(11) **EP 0 258 858 B1**
(45) Veröffentlichungstag und Bekanntmachung des Hinweises auf die Patenterteilung: **18.11.1993**
(21) Anmeldenummer: 87112647.0
(22) Anmeldetag: 29.08.1987
(51) Int. Cl.: G03B 21/132

(54) **Overhead-Projektor**
Overhead projector
Rétroprojecteur

(30) Priorität: 02.09.1986 DE 3629771
(43) Veröffentlichungstag der Anmeldung: 09.03.1988
(73) Patentinhaber: GRUNWALD PROJEKTOREN AG, FL-9491 Ruggell (LI)
(72) Erfinder: Grunwald, Peter Hein, FL-9491 Ruggell (LI)
(74) Vertreter: Junius, Walther, Dr.

(56) Entgegenhaltungen:
- EP-A- 0 064 723
- EP-A- 0 127 701
- EP-A- 0 197 691
- DE-A- 3 425 323

## Beschreibung

Die Erfindung betrifft einen Overhead-Projektor, bestehend aus einem eine Schreibplatte und eine Fresnellinse aufnehmenden Gehäuse, einem an dem Gehäuse befestigten Tragarm, einem am Tragarm befestigten Projektionskopf mit Objektiv und Umlenkspiegel, sowie aus einer Lichtquelle mit einem Netzgerät und einem Lüfter.

Overhead-Projektoren sind in einer großen Vielzahl von Typen und Bauformen bekannt geworden. Bei einem Teil der Overhead-Projektoren wird von dem Gehäuse neben der Schreibplatte und der Fresnellinse auch die Lichtquelle aufgenommen, das Gehäuse weist dann ein quaderförmiges Aussehen auf. Bei einer anderen Type von Overhead-Projektoren befindet sich die Lichtquelle im Projektionskopf, das die Schreibplatte und Fresnellinse aufnehmende Gehäuse weist dann eine sehr niedrige Bauhöhe auf und sieht einer Platte ähnlich. Das Netzgerät dieser Overhead-Projektoren befindet sich entweder im Gehäuse oder im Tragarm, bei vielen Ausführungsformen wird es mit einem vom Lüfter erzeugten Kühlluftstrom gekühlt, der meist gleichzeitig auch die Lichtquelle und eventuell das Objektiv kühlt.

Diese Overhead-Projektoren arbeiten mit gleichbleibender Helligkeit. Das hat den Nachteil, daß in Tageslicht durchfluteten Räumen die Helligkeit oft zu gering, bei abgedunkelten Räumen die Helligkeit als zu stark empfunden wird. Insbesondere beim Wechsel der Projektionsfolien wird die Helligkeit oftmals als zu stark empfunden. Eine Regelung der Helligkeit von Hand, wie sie mittels eines einfachen Potentiometers möglich ist, ist aber bei den Overhead-Projektoren nicht zur Anwendung gekommen, was seinen Grund darin haben dürfte, daß der am Overhead-Projektor arbeitende Vortragende nicht in seiner geistigen, auf den Vortrag gerichteten Konzentration gestört werden sollte.

Durch die EP-A1-0 064 723 hingegen ist eine Helligkeitssteuerung bei einem Overhead-Projektor bekannt geworden, die dazu dient, eine in den Strahlengang eintretende Hand vor Verbrennungen zu schützen. Hier ist unterhalb der Projektionsplatte ein Sensor angeordnet, der Teil der Helligkeitssteuerung ist. Sobald durch eine in den Strahlengang eintretende Hand eine Abdunklung des Sensors erfolgt, wird die Helligkeit der Lampe durch die Steuerung herabgesetzt. Diese Schaltung ist nicht geeignet, Störungen der Konzentration eines am Overhead-Projektor Vortragenden zu mindern.

Eine Überwachung und Steuerung der Bildschärfe ist bei einem mit einem Projektor zu projizierenden LCD (liquid crystal display) mit Hilfe eines Mikroprozessors durchgeführt, welcher die Bildelemente des LCDs steuert. Betriebsparameter des Projektors selbst werden bei diesem durch die EP-A1-0 127 701 bekannt gewordenen Apparat jedoch nicht gesteuert.

Die Konzentration eines mit einem Overhead-Projektor Abbildungen auf Projektionsfolien vorführenden Vortragenden kann schon dadurch gestört werden, daß es ab und an notwendig ist, die Bildschärfe oder die Helligkeit nachzuregeln. Die Konzentrationsfähigkeit eines Vortragenden wird aber auch durch das monotone und einschläfernde Lüftergeräusch beeinträchtigt.

Die Erfindung beseitigt die Nachteile des Standes der Technik. Es ist die Aufgabe der Erfindung, den Overhead-Projektor mit relativ einfachen Mitteln so zu gestalten, daß die Aufmerksamkeit des Vortragenden nicht mehr durch technische Handgriffe und Einstellungen am Overhead-Projektor gestört wird, wenn der Vortragende vor seinem Vortrag den Umlenkspiegel am Overhead-Projektor so eingestellt hat, daß die gewünschte Bildfläche auf der Projektionswand vom projizierten Bild erreicht wird.

Die Erfindung ist gekennzeichnet durch einen Mikroprozessor für die Einstellung mehrerer Parameter des Overhead-Projektors, wobei an die Eingänge des Mikroprozessors mindestens zwei der folgenden Sensoren angeschlossen sind, ein Sensor für die Umlichthelligkeit, für die Bildentfernung vom Objektiv, für den Helligkeitskontrast im Bild, für die Feststellung der Auflage einer Projektionsfolie auf der Schreibplatte, für die Temperatur in der Lichtquelle und/oder im Projektionskopf, für die Versorgungsspannung, für Spannungsabfälle oder den Stromdurchfluß durch elektrische Bauteile; wobei die Sensoren am Gehäuse und/oder am Tragarm und/oder am Projektionskopf angeordnet sind; und wobei durch die Ausgänge des Mikroprozessors mindestens zwei der folgenden Parameter geregelt werden: die Helligkeit der Lichtquelle, die Scharfeinstellung des Objektivs, die Drehzahl des Lüftermotors, die Betriebsspannung.

Dabei ist unter einem Sensor ein Fühler verstanden, bestehend aus einem Meßaufnehmer, z.B. der Helligkeit, der Entfernung, der elektrischen Spannung, des elektrischen Stromes u.a., der an seinem Ausgang einen elektrischen Impuls, eine Impulsfolge, eine Spannung, einen Strom abgibt oder seine inneren elektrischen Werte (Widerstand, Kapazität, Inductivität) ändert.

Bei diesem Overhead-Projektor werden alle Einstellfunktionen automatisch durch den Mikroprozessor auf Grund der Messungen der Sensoren ohne Hilfe des Vortragenden eingestellt. Das bringt für den Vortragenden den Vorteil mit sich, daß er sich um die Technik des Projizierens während seines Vortrages überhaupt nicht mehr zu kümmern braucht. Der Mikroprozessor stellt alle Parameter auf gewünschte optimale Werte ein und regelt sie nach. Er paßt die Helligkeit der Umlichthelligkeit an. Er sorgt für eine optimale Fokussierung. Er sorgt für wechselnde Lüfterdrehzahlen, damit nicht ein monotones Lüftergeräusch den Vortragenden beim Vortrag und die Zuhörer beim Verfolgen des Vortrages einschläfert. Er sorgt für eine Herabschaltung der Projektionshelligkeit beim Folienwechsel, er dient der Spannungsstabilisierung und Einstellung und kann auch die Funktionen eines Netzgerätes übernehmen.

Vorteilhaft ist es, wenn ein Eingang des Mikroprozessors an den Ausgang eines Signalempfängers angeschlossen ist, dem ein vom Overhead-Projektor entfernt aufgestellter und/oder ein am Overhead-Projektor angebrachter Signalgeber zugeordnet ist. Hierdurch wird es dem Vortragenden ermöglicht, sich auch während der Projektion vom Overhead-Projektor zu entfernen und trotzdem Regeleingriffe, z.B. Verstellung der Helligkeit, vornehmen zu können, wenn er dieses wünscht.

Vorteilhaft ist es weiterhin, wenn mindestens ein Ausgang des Mikroprozessors an eine am Overhead-Projektor angebrachte Anzeigeleuchte angeschlossen ist, Mit derartigen Anzeigeleuchten kann eine Anzeige des projizierten Formats, aber auch eine Defektanzeige oder die Anzeige zu erwartender Defekte signalisiert werden. Z.B. kann signalisiert werden, daß die normale Lebensdauer der Projektionslampe überschritten ist, oder daß das Stromaufnahmeverhalten der Projektionslampe darauf hindeutet, daß diese innerhalb einer bestimten Zeitspanne ausfallen wird, daß Temperaturen an bestimmten Stellen des Overhead-Projektors so groß geworden sind, daß eine weitere Helligkeitssteigerung nicht mehr zugelassen wird, daß die Versorgungsspannung für den Betrieb nicht geeignet ist und anderes mehr. Weiterhin kann es vorteilhaft sein, wenn mindestens ein Ausgang des Mikroprozessors an ein LCD-Display angeschlossen ist, auf welchem dann verschiedene Angaben, wie z.B. die Zeitdauer des Vortrages, die Erinnerung an bestimmte zu besprechende Vortragsthemen und anderes mehr, erscheinen.

Zweckmäßig kann es sein, wenn der Mikroprozessor ein Generator von nach Gesetzen des Zufalls erzeugten Spannungen oder für nach einem Schema wechselnden Spannungen für den Betrieb des Lüfters beinhaltet, um nicht monotone Lüftergeräusche entstehen zu lassen.

Zweckmäßig kann es sein, wenn der Mikroprozessor eine Schaltung für eine Abdunkelung der Lichtquelle bei Folienwechsel enthält, damit das Auge nicht durch zu große Helligkeit gestört wird, wenn eine Folie gewechselt wird und sich nicht nach dem Folienwechsel erst wieder an die geringere Helligkeit des projizierten Bildes gewöhnen muß.

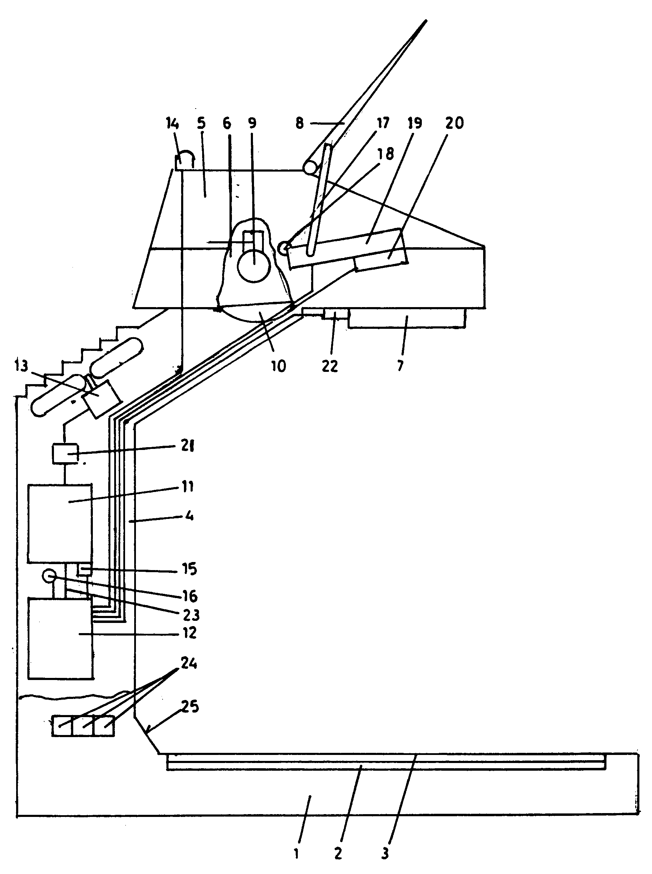

Das Wesen der Erfindung ist nachstehend anhand eines in der Zeichnung schematisch dargestellten Ausführungsbeispieles näher erläutert. Die Zeichnung zeigt einen Overhead-Projektor teilweise im Schnitt.

Der Overhead-Projektor weist ein Gehäuse 1 auf, welches die Fresnellinse 2 und die Schreibplatte 3 aufnimmt. An dem Gehäuse 1 ist der Tragarm 4 befestigt, der den Projektionskopf 5 trägt und der auch die Lichtquelle 6 trägt. Der Projektionskopf 5 weist ein Objektiv 7 und den Umlenkspiegel 8 auf. Die Lichtquelle 6 weist eine Lampe 9 und einen Kondensor 10 auf. Im Inneren des hohlen Tragarmes 4 ist das Netzgerät 11, der Mikroprozessor 12 und der Lüfter 13 untergebracht. Am Tragarm 4 ist ein Sensor 14 für die Feststellung der Umlichthelligkeit, d.h. für die Helligkeit im Raum, angeordnet. Vor dem Netzgerät 11 ist ein Sensor 15 für die Feststellung der Höhe der Versorgungsspannung vorgesehen. Im Tragarm 4 ist ein Sensor 16 für die Feststellung der Temperatur im Tragarm und damit für die Temperatur am Netzgerät und am Mikroprozessor vorgesehen. Gekoppelt mit dem Umlenkspiegel 8 über den Hebel 17 ist ein im Gelenk 18 gelagerter Sensor 19 für die Bildentfernung und mit diesem gekoppelt ein Sensor 20 für den Bildkontrast vorgesehen. Vor dem Lüfter 13 ist ein Regler für den Lüfter vorgesehen, der an einen Ausgang des Mikroprozessors 12 angeschlossen ist. Am Objektiv 7 ist ein Regler 22 mit einem Motor für die Einstellung des Objektives vorgesehen. Dieser Regler 22 ist an einen anderen Ausgang des Mikroprozessor 12 angeschlossen. Die Leitung 23 vom Ausgang des Mikroprozessors führt zum Netzgerät 11 und dient der Helligkeitseinstellung der Lampe 9. Am Gehäuse 1 des Overhead-Projektors sind vom Mikroprozessor 12 gespeiste Anzeigeleuchten 24 und ein LCD-Display 25 vorgesehen.

Insbesondere ist es vorteilhaft, wenn an den Mikroprozessor eine Vorrichtung zur Scharfeinstellung des Objektives, vorzugsweise eine Autofokus-Vorrichtung, angeschlossen ist, und wenn an den Eingang des Mikroprozessors mindestens ein Geber einer Meßvorrichtung für die Entfernung zwischen Objektiv und Projektionswand angeschlossen ist. Hierdurch ist erreicht, daß vom Mikroprozessor eine ständige Scharfstellung des Objektives erreicht ist.

Weiter ist es für die Erzielung eines hervorragenden Bildes vorteilhaft, wenn das Objektiv bzw. Linsen im Objektiv und/oder der Umlenkspiegel und/oder die Fresnellinse und/oder die Lampe und/oder der dieser zugeordnete Reflektor und/oder der dieser zugeordnete Kondensor verstellbar angeordnet sind, und wenn im Mikroprozessor eine Schaltung zur Feststellung der optimalen Einstellung dieser verstellbaren Bauteile vorgesehen ist, deren Ausgang mit einer Anzeigevorrichtung und/oder Verstellmotoren für diese Bauteile verbunden ist.

Hierbei ist es insbesondere vorteilhaft, wenn im Mikroprozessor eine Schaltung vorgesehen ist, mit der unter Einhaltung der Scheinpflug'schen Regel Objektiv und/oder Umlenkspiegel und/oder Fresnellinse und/oder Schreibplatte so verstellt werden, daß das projizierte Bild geringst mögliche Kantenverzerrungen aufweist, und bei der insbesondere an den Eingang des Mikroprozessors eine Vorrichtung zur Ausmessung der Bildkante angeschlossen ist.

Der Mikroprozessor kann hierbei die Aufgabe einer automatischen Einstellung übernehmen, wenn Verstellmotore vorgesehen sind, er kann aber auch durch Anzeige der Abweichung von optimalen Werten oder des Erreichens von optimalen Werten bei einer Einstellung der Bauteile von Hand die Tätigkeit der Bedienungsperson steuern.

Für die Überwachung und die automatische oder manuelle Einstellung des Overhead-Projektors ist es zweckmäßig, wenn an den Ausgang des Mikroprozessors ein Anzeigepaneel mit mehreren Anzeigevorrichtungen für die Anzeige der Lebensdauer von Bauteilen wie Lampe, Motoren und dergleichen und/oder der Anzeige von Problemen, wie Lampenausfall, Temperaturüberschreitungen in Bauteilen, wie Netzgerät, Motoren, Objektiv oder dergleichen, sowie Temperaturüberschreitungen an der Projektionsvorlage angeschlossen ist, und wenn an den Eingang des Mikroprozessors entsprechende Meßgeber angeschlossen sind.

Von besonderer Bedeutung ist die Einhaltung optimaler Temperaturen im Overhead-Projektor. Hierfür ist es zweckmäßig, wenn an den Eingang des Mikroprozessors Temperaturmeßgeber für die Steuerung der Lüfterdrehzahl angeschlossen sind. Auf diese Weise läßt sich der Lüfter auf geringst zulässige Drehzahlwerte einstellen, wodurch der Overhead-Projektor im Betrieb eine geringst mögliche Geräuschentwicklung aufweist.

Sollen verschiedene Bildformate projiziert werden, so ist es zweckmäßig, wenn eine Vorrichtung zum Maskieren von Arbeitsflächen und/oder zum Einstellen des Zoomobjektives vorgesehen sind, die vom Mikroprozessor gesteuert sind. Diese Vorrichtung zum Maskieren von Arbeitsflächen kann z.B. aus LCDs bestehen, die hell bzw. dunkel gesteuert werden, und zwar hell gesteuert an denjenigen Flächen, auf denen die zu projizierende Vorlage aufliegt und dunkel an denjenigen Flächen, auf denen die Vorlage nicht aufliegt und die daher nicht zur Projektion kommen sollen. Durch die Einstellung des Zoomobjektives entsprechend der abzubildenden Vorlagenfläche wird erreicht, daß immer das größtmögliche Bild projiziert wird, entsprechend der Größe der Projektionswand, auf die das Bild projiziert wird.

## Patentansprüche

1. Overhead-Projektor,
bestehend aus einem eine Schreibplatte und eine Fresnellinse aufnehmenden Gehäuse,
einem an dem Gehäuse befestigten Tragarm,
einem am Tragarm befestigten Projektionskopf mit Objektiv und Umlenkspiegel,
sowie aus einer Lichtquelle mit einem Netzgerät und einem Lüfter,
gekennzeichnet durch
einen Mikroprozessor (12) für die Einstellung mehrerer Parameter des Overhead-Projektors,
wobei an die Eingänge des Mikroprozessors (12) mindestens zwei der folgenden Sensoren angeschlossen sind,
ein Sensor für die Umlichthelligkeit (14),
für die Bildentfernung (19) vom Objektiv (7),
für den Helligkeitskontrast (20) im Bild,
für die Feststellung der Auflage einer Projektionsfolie auf der Schreibplatte (3),
für die Temperatur in der Lichtquelle (6) und/oder im Projektionskopf (5),
für die Versorgungsspannung,
für Spannungsabfälle oder den Stromdurchfluß durch elektrische Bauteile;
wobei die Sensoren am Gehäuse (1) und/oder am Tragarm (4) und/oder am Projektionskopf (5) angeordnet sind;
und wobei durch die Ausgänge des Mikroprozessors (12) mindestens zwei der folgenden Parameter geregelt werden:
die Helligkeit der Lichtquelle (6),
die Scharfeinstellung des Objektivs,
die Drehzahl des Lüftermotors (13),
die Betriebsspannung.

2. Overhead-Projektor nach Anspruch 1,
dadurch gekennzeichnet,
daß ein Eingang des Mikroprozessors (12) an den Ausgang eines Signalempfängers angeschlossen ist, dem ein vom Overhead-Projektor entfernt aufgestellter und/oder ein am Overhead-Projektor angebrachter Signalgeber zugeordnet ist.

3. Overhead-Projektor nach Anspruch 1,
dadurch gekennzeichnet,
daß mindestens ein Ausgang des Mikroprozessors (12) an eine am Overhead-Projektor angebrachte Anzeigeleuchte (24) angeschlossen ist.

4. Overhead-Projektor nach Anspruch 1,
dadurch gekennzeichnet,
daß mindestens ein Ausgang des Mikroprozessors (12) an ein LCD-Display (25) angeschlossen ist.

5. Overhead-Projektor nach Anspruch 1,
dadurch gekennzeichnet,
daß der Mikroprozessor (12) einen Generator von nach Gesetzen des Zufalls erzeugten Spannungen oder für nach einem Schema wechselnden Spannungen für den Betrieb des Lüfters (13) beinhaltet.

6. Overhead-Projektor nach Anspruch 1,
dadurch gekennzeichnet,
daß der Mikroprozessor (12) eine Schaltung für eine Abdunklung der Lichtquelle (6) bei Folienwechsel enthält.

7. Overhead-Projektor nach Anspruch 1,
dadurch gekennzeichnet,
daß an den Mikroprozessor eine Vorrichtung zur Scharfeinstellung des Objektives, vorzugsweise eine Autofokusvorrichtung, angeschlossen ist, und daß an den Eingang des Mikroprozessors mindestens ein Geber einer Meßvorrichtung für die Entfernung zwischen Objektiv und Projektionswand angeschlossen ist.

8. Overhead-Projektor nach Anspruch 1,
dadurch gekennzeichnet,
daß das Objektiv bzw. Linsen im Objektiv und/oder der Umlenkspiegel und/oder die Fresnellinse und/oder die Lampe und/oder der dieser zugeordnete Reflektor und/oder der dieser zugeordnete Kondensor verstellbar angeordnet sind,
und daß im Mikroprozessor eine Schaltung zur Feststellung der optimalen Einstellung dieser verstellbaren Bauteile vorgesehen ist,
deren Ausgang mit einer Anzeigevorrichtung und/oder Verstellmotoren für diese Bauteile verbunden ist.

9. Overhead-Projektor nach Anspruch 8,
dadurch gekennzeichnet,
daß im Mikroprozessor eine Schaltung vorgesehen ist, mit der unter Einhaltung der Scheinpflugschen Regel Objektiv und/oder Umlenkspiegel und/oder Fresnellinse und/oder Schreibplatte so verstellt werden, daß das projizierte Bild geringst mögliche Kantenverzerrungen aufweist, und bei der insbesondere an den Eingang des Mikroprozessors eine Vorrichtung zur Ausmessung der Bildkante angeschlossen ist.

10. Overhead-Projektor nach Anspruch 1,
dadurch gekennzeichnet,
daß an den Ausgang des Mikroprozessors ein Anzeigepaneel mit mehreren Anzeigevorrichtungen für die Anzeige der Lebensdauer von Bauteilen wie Lampe, Motoren und dergleichen und/oder der Anzeige von Problemen wie Lampenausfall, Temperaturüberschreitungen in Bauteilen wie Netzgerät, Motoren, Objektiv und dergleichen, sowie Temperaturüberschreitungen an der Projektionsvorlage angeschlossen ist,
und daß an den Eingang des Mikroprozessors entsprechende Meßgeber angeschlossen sind.

11. Overhead-Projektor nach Anspruch 1,
dadurch gekennzeichnet,
daß an den Eingang des Mikroprozessors Temperaturmeßgeber für die Steuerung der Lüfterdrehzahl angeschlossen sind.

12. Overhead-Projektor nach Anspruch 1,
dadurch gekennzeichnet, daß das Objektiv als Zoomobjektiv ausgebildet ist und daß eine Vorrichtung zum Maskieren von Arbeitsflächen und/oder zum Einstellen des Zoomobjektives vorgesehen sind, die vom Mikroprozessor gesteuert sind.

## Claims

1. An overhead projector comprising a housing which accommodates a platen and a Fresnel lens, a carrier arm attached to the housing, a projection head attached to the carrier arm with objective and deflecting mirror, and a light source with a power supply unit and a fan, characterised by a microprocessor (12) for the adjustment of a plurality of parameters of the overhead projector, where the inputs of the microprocessor (12) are connected to at least two of the following sensors: a sensor for the ambient brightness (14), for the distance of the image (19) from the objective (7), for the brightness contrast (20) in the image, for determining that a transparency is resting on the platen (3), for the temperature in the light source (6) and/or in the projection head (5), for the supply voltage, for voltage drops or for the flow of current through electrical components; where the sensors are arranged on the housing (1) and/or on the carrier arm (4) and/or on the projection head (5); and where at least two of the following parameters are regulated by the outputs of the microprocessor (12): the brightness of the light source (6), the focus of the objective, the speed of the fan motor (13), the operating voltage.

2. An overhead projector as claimed in Claim 1, characterised in that an input of the microprocessor (12) is connected to the output of a signal receiver which is associated with a signal generator erected at a distance from the overhead projector and/or a signal generator arranged on the overhead projector.

3. An overhead projector as claimed in Claim 1, characterised In that at least one output of the microprocessor (12) is connected to a display light (24) arranged on the overhead projector.

4. An overhead projector as claimed in Claim 1, characterised in that at least one output of the microprocessor (12) is connected to a LCD display (25).

5. An overhead projector as claimed in Claim 1, characterised in that the microprocessor (12) comprises a generator of voltages, which are generated in accordance with the laws of chance or which change in accordance with a plan, for the operation of the fan (13).

6. An overhead projector as claimed in Claim 1, characterised in that the microprocessor (12) comprises a circuit for darkening the light source (6) when transparencies are changed.

7. An overhead projector as claimed in Claim 1, characterised in that the microprocessor is connected to a device for focussing the objective, preferably an autofocus device, and that the input of the microprocessor is connected to at least one sensor of a measuring device for measuring the distance between the objective and the screen.

8. An overhead projector as claimed in Claim 1, characterised in that the objective, or the lenses in the objective, and/or the deflecting mirror and/or the Fresnel lens and/or the lamp and/or the associated reflector and/or the associated condenser are arranged so as to be adjustable, and that in the microprocessor a circuit is provided for determining the optimal settings of these adjustable components, the output of which circuit is connected to a display device and/or adjusting motors for these components.

9. An overhead projector as claimed in Claim 8, characterised in that in the microprocessor a circuit is provided with which, in adherence to Scheinpflug's Law, the objective and/or deflecting mirror and/or Fresnel lens and/or platen are adjusted in such manner that the projected image exhibits the fewest possible edge distortions and where in particular the input of the microprocessor is connected to a device for measuring the edge of the image.

10. An overhead projector as claimed in Claim 1, characterised in that the output of the microprocessor is connected to a display panel comprising a plurality of display devices for displaying the life of components such as lamp, motors and the like and/or for displaying problems such as lamp failure, excess temperatures in components such as the power supply unit, motors, objective and the like, and excess temperatures of the original to be projected, and that the input of the microprocessor is connected to corresponding sensors.

11. An overhead projector as claimed in Claim 1, characterised in that the input of the microprocessor is connected to temperature sensors for controlling the speed of the fan.

12. An overhead projector as claimed in Claim 1, characterised in that the objective has the form of a zoom objective and that a device for masking operating surfaces and/or for adjusting the zoom objective is/are provided, which devices are controlled by the microprocessor.

## Revendications

1. Rétroprojecteur composé
d'un boîtier qui renferme une plage de travail et une lentille de Fresnel,
d'un bras porteur fixé au boîtier,
d'une tête de projection fixée au bras porteur et munie d'un objectif et d'un miroir de renvoi,
ainsi que d'une source lumineuse équipée d'un boîtier d'alimentation et d'un ventilateur,
caractérisé par un microprocesseur (12) servant pour le réglage de plusieurs paramètres du rétroprojecteur,
dans lequel, aux entrées du microprocesseur (12) sont raccordés deux des capteurs suivants,
un capteur pour la luminosité de l'éclairage (14),
pour la distance (19) de l'image à l'objectif,
pour le contraste (20) de la luminosité dans l'image,
pour la détection de la pose d'un film de projection sur la plage de travail (3),
pour la température régnant dans la source lumineuse (6) et/ou dans la tête de projection (5), pour la tension d'alimentation,
pour les chutes de tension ou le passage du courant à travers les composants électriques ;
les capteurs étant agencés sur le boîtier (1) et/ou sur le bras porteur (4) et/ou sur la tête de projection (5) ;
et où, pour les sorties du microprocesseur (12), on règle au moins deux des paramètres suivants :
la luminosité de la source lumineuse (6),
la mise au point de l'objectif,
la vitesse de rotation du moteur (13) du ventilateur,
la tension de service.

2. Rétroprojecteur selon la revendication 1,
caractérisé
en ce qu'une entrée du microprocesseur (10) est connectée à la sortie d'un récepteur de signaux auquel est associé un émetteur de signaux monté à distance du rétroprojecteur et/ou monté sur le rétroprojecteur.

3. Rétroprojecteur selon la revendication 1,
caractérisé
en ce qu'au moins une sortie du microprocesseur (12) est connectée à une lampe indicatrice (24) prévue sur le rétroprojecteur.

4. Rétroprojecteur selon la revendication 1,
caractérisé
en ce qu'au moins une sortie du rétroprojecteur (12) est connectée à un affichage à cristaux liquides (25).

5. Rétroprojecteur selon la revendication 1,
caractérisé
en ce que le microprocesseur (12) comprend un générateur de tensions aléatoires ou de tensions variant selon un certain schéma pour l'entraînement du ventilateur (16).

6. Rétroprojecteur selon la revendication 1,
caractérisé
en ce que le microprocesseur (12) comprend une commande servant à assombrir la source lumineuse (6) au moment des changements de films.

7. Rétroprojecteur selon la revendication 1,
caractérisé
en ce qu'au microprocesseur, est connecté un dispositif de mise au point de l'objectif, de préférence un dispositif "autofocus",
et en ce qu'à l'entrée du microprocesseur est connecté au moins un émetteur appartenant à un dispositif de mesure servant à mesurer la distance entre l'objectif et l'écran de projection.

8. Rétroprojecteur selon la revendication 1,
caractérisé
en ce que l'objectif ou les lentilles de l'objectif et/ou le miroir de renvoi et/ou la lentille de Fresnel et/ou la lampe et/ou le réflecteur associé à cette lampe et/ou le condenseur associé à cette lampe sont agencés réglables,
et en ce que, dans le microprocesseur, est prévue une commande pour la fixation du réglage optimal de ces composants réglables,
dont la sortie est connectée à un dispositif indicateur et/ou à des moteurs de réglage agissant sur ces composants.

9. Rétroprojecteur selon la revendication 8,
caractérisé
en ce que, dans le microprocesseur, est prévue une commande avec laquelle, en respectant la règle de Scheinpflug, l'objectif et/ou le miroir de renvoi et/ou la lentille de Fresnel et/ou la plaque d'écriture sont réglés de manière que l'image projetée présente des distorsions marginales aussi faibles que possible et dans lequel un dispositif de mesure des bords de l'image est connecté en particulier à l'entrée du microprocesseur.

10. Rétroprojecteur selon la revendication 1,
caractérisé
en ce que la sortie du microprocesseur est connectée une tablette d'information munie de plusieurs dispositifs indicateurs destinés à indiquer la durée de vie des composants tels que la lampe, les moteurs et équivalents et/ou pour signaler des problèmes tels qu'une panne de la lampe, les dépassements de température dans les composants tels que le boîtier d'alimentation, les moteurs, l'objectif et équivalents, ainsi que les dépassements de température au niveau du document à projeter,
et en ce que des émetteurs de mesure correspondants sont connectés à l'entrée du rétroprojecteur.

11. Rétroprojecteur selon la revendication 1,
caractérisé
en ce qu'à l'entrée du microprocesseur, sont connectés des émetteurs de mesure de température servant à la commande de la vitesse de rotation du ventilateur.

12. Rétroprojecteur selon la revendication 1,
caractérisé
en ce que l'objectif est constitué par un objectif à focale variable et
en ce qu'il est prévu un dispositif servant à masquer les surfaces de travail et/ou à régler l'objectif à focale variable, qui sont pilotés par le microprocesseur.
